# EUROPÄISCHE PATENTANMELDUNG

(11) **EP 1 707 876 A1**
(43) Veröffentlichungstag der Anmeldung: **04.10.2006**
(21) Anmeldenummer: 05005921.1
(22) Anmeldetag: 18.03.2005
(51) Int. Cl.: F23J 15/04, B01D 53/00

(54) **Im wesentlichen horizontal durchströmte Rauchgasreinigungsvorrichtung**

(71) Anmelder: Lurgi Lentjes AG, 40549 Düsseldorf (DE)
(72) Erfinder: Risse, Theo, 59368 Werne (DE); Moser, Christian, 45359 Essen (DE)
(74) Vertreter: Stenger, Watzke & Ring

(57) **Zusammenfassung**

Vorrichtung zur Rauchgasreinigung mit einem Behälter (12), der einen von dem zugeführten Rauchgas im wesentlichen horizontal durchströmbaren Absorptionsbereich (18) aufweist.

## Beschreibung

Die vorliegende Erfindung betrifft eine Vorrichtung und ein Verfahren zur Reinigung von Abgas, insbesondere zur Reinigung von Rauchgas eines Kohlekraftwerks oder dergleichen.

Vorrichtungen zur Reinigung sind bereits bekannt. Sie umfassen normalerweise einen Waschturm mit Waschflüssigkeitsdüsen, die häufig in mehreren Ebenen angeordnet sind, einen Waschflüssigkeitssumpf, in dem Waschflüssigkeit gesammelt wird, und einen Absorptionsbereich, der sich in einem zylindrischen Behälterabschnitt des Waschturms vom Waschflüssigkeitssumpf bis zur oberen Waschflüssigkeitsdüsenebene erstreckt. Rauchgas wird in einen unteren Abschnitt des Absorptionsbereiches in den Waschturm eingeleitet, strömt von dort im wesentlichen vertikal aufwärts, und verläßt den Waschturm durch eine oberhalb der Waschflüssigkeitsdüsen vorgesehene Austrittsöffnung. Auf seinem Weg durch den Waschturm kommt das Rauchgas mit aus den Waschflüssigkeitsdüsen austretender Waschflüssigkeit in Kontakt und wird gereinigt, was nachfolgend näher beschrieben ist. Eine derartige Reinigungsvorrichtung ist beispielsweise aus der DE-A-1 00 58 548 bekannt.

Die Waschflüssigkeit umfaßt neben Wasser vorzugsweise Erdalkalien, die mit den im Rauchgas vorhandenen Schwefeloxiden und mit dem im Waschturm erzeugten Schwefeloxiden reagieren. Es wird insbesondere Kalk in Form von Kalziumoxid, Kalziumhydroxid, Kalziumkarbonat oder dergleichen verwendet.

Die Erdalkalien reagieren mit den in dem Rauchgas vorhandenen Schwefeloxiden im wesentlichen zu Kalziumsulfit, das in der Waschflüssigkeit gebunden wird. Das Rauchgas wird auf diese Weise von den unerwünschten Schwefeloxiden gereinigt und tritt anschließend aus der Reinigungsvorrichtung aus. Die Waschflüssigkeit hingegen gelangt zusammen mit den in dieser schwebend gehaltenen Kalziumsulfitteilchen in den Waschflüssigkeitssumpf und wird dort gesammelt.

Kalziumsulfat, das bei der Rauchgasreinigung gebildet wird, weist ähnlich vorteilhafte Eigenschaften wie Naturgips auf. Somit handelt es sich hierbei um ein erwünschtes Nebenprodukt des Rauchgasreinigungsverfahrens, das aus der im Waschflüssigkeitssumpf gesammelten Waschflüssigkeit gewonnen wird. Die Kalziumsulfatteilchen werden zusammen mit der Waschflüssigkeit dem Waschflüssigkeitssumpf entnommen und dieser in einem sich anschließenden Verfahren entzogen. Das Kalziumsulfat kann dann zu verschiedenen Werkstoffen weiterverarbeitet werden, insbesondere zu Bauwerkstoffen.

Ein Problem bei der Gewinnung von Kalziumsulfat besteht schließlich darin, daß bei der Reaktion der Waschflüssigkeit mit dem Rauchgas nicht nur Kalziumsulfat sondern auch unerwünschte Nebenprodukte wie beispielsweise Sulfite, insbesondere Kalziumsulfit, entstehen, die das Kalziumsulfat verunreinigen und somit die Qualität mindern.

Um den Anteil dieser unerwünschten Sulfite in der in dem Waschflüssigkeitssumpf vorhandenen Waschflüssigkeit zu verringern, wird in der US-A-4 539 184 vorgeschlagen, in zumindest einem Bereich des Waschflüssigkeitssumpfes Sauerstoff in Form von Luft oder dergleichen einzubringen, um dort vorhandene Kalziumsulfite zu Kalziumsulfat zu oxidieren.

Bei der Gewinnung von Kalziumsulfat guter Qualität ist ferner darauf zu achten, daß möglichst wenig Erdalkalien in der im Waschflüssigkeitssumpf vorhandenen Waschflüssigkeit enthalten sind, wenn die Waschflüssigkeit zur Gewinnung von Kalziumsulfat dem Waschflüssigkeitssumpf entnommen wird.

Entsprechend sollten nahezu alle der Waschflüssigkeit beigemischten Erdalkalien während des Rauchgasreinigungsprozesses mit den im zu reinigenden Rauchgas vorhandenen Schwefeloxiden reagieren.

Eine derart vollständige Reaktion der Erdalkalien kann durch verschiedene Maßnahmen angenähert werden, die auch gemeinsam durchgeführt werden können.

Zum einen kann eine Verbesserung der Reaktion zwischen den Reaktionspartnern angestrebt werden, um die Wahrscheinlichkeit einer entsprechenden Reaktion zu erhöhen.

Die Reaktion von Erdalkalien und Schwefeloxiden zu Kalziumsulfit erfolgt durch Diffusion und/oder Lösung an der Kontaktfläche zwischen Waschflüssigkeit und Rauchgas. Je größer demnach die Kontaktfläche ist, desto besser wird die erzielte Reaktion sein. Die Kontaktfläche ist umgekehrt proportional zur Größe bzw. zum Durchmesser der die Waschflüssigkeitsdüsen verlassenden Waschflüssigkeitstropfen. Entsprechend wird beispielsweise in der CA-A-1 251 919 vorgeschlagen, die Waschflüssigkeit mittels der Waschflüssigkeitsdüsen möglichst fein zu zerstäuben, um auf diese Weise die Größe der Waschflüssigkeitstropfen zu verringern und entsprechend die Gesamtkontaktfläche zwischen Waschflüssigkeit und zu reinigendem Rauchgas zu vergrößern.

Eine bessere Reaktion der Erdalkalien während des Rauchgasreinigungsprozesses kann zum anderen auch dadurch erzielt werden, daß die Verweildauer der Waschflüssigkeit in dem Absorptionsbereich des Waschturms verlängert wird, um den Erdalkalien somit ausreichend Gelegenheit zu geben, mit Schwefeloxiden im Rauchgas zu reagieren. Auf diese Weise wird die Wahrscheinlichkeit erhöht, daß jedes Erdalkalienteilchen an einer solchen Reaktion teilnimmt. Zur Erhöhung der Verweildauer der Waschflüssigkeit in dem Absorptionsbereich des Waschturms schlägt beispielsweise die CA-A-1 251 919 vor, die Waschflüssigkeit mehrmals zwischen Waschflüssigkeitssumpf und Waschflüssigkeitsdüsen zirkulieren zu lassen, so daß diese häufiger den Absorptionsbereich des Waschturms passiert.

Ferner kann die in dem Absorptionsbereich der Reinigungsvorrichtung erfolgende Reaktion auch durch die Strömung des Rauchgases durch den Absorptionsbereich beeinflußt werden. Je länger nämlich das Rauchgas in dem Absorptionsbereich verweilt und je gleichmäßiger die Rauchgasströmung durch den Absorptionsbereich ist, desto besser ist die Ausscheidung von Schwefeloxiden und entsprechend die Reaktion zu Kalziumsulfat.

Diesbezüglich beschreibt die DE-A-100 58 548 einen Waschturm für eine Rauchgasreinigungsanlage, bei dem die Rauchgaszufuhr in den Absorptionsbereich durch zwei auf gleicher Höhe an gegenüberliegenden Mantelabschnitten des Waschturms angeordnete Rauchgaseinlässe erfolgt, die mit einer annähernd tangentialen gleichsinnigen Ausrichtung in den Absorptionsbereich einmünden. Dabei weisen die beiden Rauchgaseinlässe Endstücke auf, die in den zylindrischen Innenraum des Waschturms vorstehen und die Rauchgaseinlässe gegenüber einer ringförmigen Gasströmung im Behälter abschirmen. An jeden Rauchgaseinlaß ist ein Strang für die Rauchgaszuführung mit separatem Rauchgaskanal, Elektrofilter und Gebläse angeschlossen. Bei Volllastbetrieb der Kesselfeuerung wird das Rauchgas über beide Stränge gleichzeitig dem Waschturm zugeführt. Im Teillastbetrieb kann nur einer der beiden Stränge angeschaltet werden. Sowohl bei Volllastbetrieb als auch bei Teillastbetrieb stellt sich im unteren Bereich des Absorptionsbereiches eine Zirkulationsströmung des Rauchgases ein, die durch Beregnung mit Waschflüssigkeit zum oberen Bereich des Absorptionsbereiches hin abgebremst wird und in eine vertikale Rauchgasströmung übergeht. Durch diese Rauchgaszufuhr und den sich dadurch einstellenden Rauchgasstrom innerhalb des Absorptionsbereiches wird die Abscheidung von Schwefeldioxid und somit der Reinigungsprozess verbessert. Ein Nachteil besteht allerdings in dem sehr komplizierten Aufbau der Rauchgaszuführung und in der ungleichmäßigen Strömung innerhalb des Absorptionsbereiches.

Es ist daher eine Aufgabe der vorliegenden Erfindung, eine Vorrichtung und ein Verfahren zur Rauchgasreinigung zu schaffen, die die zuvor beschriebenen Nachteile überwindet.

Gemäß der vorliegenden Erfindung wird diese Aufgabe durch eine Vorrichtung zur Rauchgasreinigung nach Anspruch 1 und durch ein Verfahren zur Rauchgasreinigung nach Anspruch 7 gelöst.

Gemäß der vorliegenden Erfindung umfaßt die Vorrichtung zur Rauchgasreinigung einen Behälter, der einen von dem zugeführten Rauchgas im wesentlichen horizontal durchströmbaren Absorptionsbereich aufweist. Im Gegensatz zu der DE-A-100 58 548 wird das Rauchgas also nicht in einen unteren Abschnitt der Mantelfläche des Absorptionsbereichs eingeleitet und strömt dann spiralförmig aufwärts, also im wesentlichen vertikal, bis zum oberen Abschnitt des Absorptionsbereiches, wo es den Waschturm an dessen Oberseite verläßt, sondern es strömt im wesentlichen horizontal durch den Absorptionsbereich hindurch, tritt also auf der einen Seite in den Absorptionsbereich ein und verläßt diesen auf der anderen Seite. Der Vorteil der im wesentlichen horizontalen Durchströmung des Absorptionsbereichs liegt darin, daß hier eine sehr gleichmäßige Strömung realisierbar ist, die wiederum eine verbesserte Schwefeloxidabscheidung im Absorptionsbereich ermöglicht. Ferner kann auf eine komplizierte und teure Rauchgaszuführung verzichtet werden.

Gemäß einer bevorzugten Ausgestaltung der vorliegenden Erfindung sind Rauchgaseinlaß und Rauchgasauslaß des Absorptionsbereiches einander gegenüber angeordnet, um eine möglichst gleichmäßige Rauchgasströmung in dem Absorptionsbereich zu realisieren.

Ferner ist eine im wesentlichen quaderförmige Ausbildung des Behälters bevorzugt, da Einrichtungen, wie beispielsweise Waschflüssigkeitsdüsen, Oxidationseinrichtungen oder dergleichen, normalerweise einfacher an ebenen Flächen als an gekrümmten Flächen befestigbar sind.

Weiterhin ist bevorzugt, daß die erfindungsgemäße Vorrichtung eine Pumpeinrichtung umfaßt, die Waschflüssigkeit aus dem Waschflüssigkeitssumpf zu Waschflüssigkeitsdüsen pumpt, wodurch in der Vorrichtung ein Waschflüssigkeitskreislauf entsteht. Aufgrund dieser Zirkulierung der Waschflüssigkeit ist gewährleistet, daß die Waschflüssigkeit den Absorptionsbereich der Vorrichtung, in dem die Rauchgasreinigung stattfindet, mehrmals passiert. Dadurch wird sichergestellt, daß zumindest ein Großteil der in der Waschflüssigkeit vorhandenen Additive mit dem im Rauchgas vorhandenen Schweloxiden reagiert, so daß im Waschsumpf eine Waschflüssigkeit mit geringer Additivkonzentration gesammelt wird. Dies ist in Bezug auf die Kalziumsulfatgewinnung vorteilhaft.

Ferner umfaßt die Vorrichtung gemäß einer bevorzugten Ausgestaltung eine Waschflüssigkeitsanalyseeinrichtung, mit der die Waschflüssigkeit hinsichtlich ihrer Zusammensetzung, ihres pH-Wertes oder dergleichen analysiert werden kann. Basierend auf einem auf diese Weise erzielten Waschflüssigkeitsanalyseergebnis kann beispielsweise der Zeitpunkt bestimmt werden, wann dem Waschflüssigkeitssumpf Waschflüssigkeit zur Kalziumsulfatgewinnung entnommen werden soll, nämlich dann, wenn in diesem Waschflüssigkeit mit der gewünschten Zusammensetzung oder dergleichen vorhanden ist. Die Waschflüssigkeitsanalyseeinrichtung arbeitet vorzugsweise kontinuierlich, um stets aktuelle Ergebnisse zu liefern.

Basierend auf dem Waschflüssigkeitsanalyseergebnis kann ferner der Zeitpunkt ermittelt werden, wann der Waschflüssigkeit welches Additiv in welcher Menge oder Konzentration hinzugefügt werden soll.

Schließlich ist es vorteilhaft, daß zumindest eine Seite des Behälters derart ausgebildet ist, daß das Volumen des Absorptionsbereiches von einem Rauchgaseinlaß zu einem Rauchgasauslaß zunimmt oder abnimmt, so daß das den Absorptionsbereich durchströmende Rauchgas entsprechend abgebremst oder beschleunigt wird, was wiederum entsprechende Auswirkung auf die Verweilzeit des Rauchgases im Absorptionsbereich hat. Bei der zumindest einen Behälterseite kann es sich beispielsweise um die Oberseite, um eine oder mehrere Seitenwände oder um eine entsprechende Kombination handeln.

Nachfolgend wird die Erfindung unter Bezugnahme auf die Zeichnung genauer beschrieben. Darin ist
- Fig. 1: eine perspektivische Ansicht einer ersten Ausgestaltung der Vorrichtung zur Rauchgasreinigung gemäß der vorliegenden Erfindung,
- Fig. 2: eine Seitenansicht der in Fig. 1 dargestellten ersten Ausgestaltung,
- Fig.3: eine perspektivische Ansicht einer zweiten Ausgestaltung der Vorrichtung zur Rauchgasreinigung gemäß der vorliegenden Erfindung,
- Fig. 4: eine perspektivische Ansicht einer dritten Ausgestaltung der Vorrichtung zur Rauchgasreinigung gemäß der vorliegenden Erfindung,
- Fig. 5: eine perspektivische Ansicht einer vierten Ausgestaltung der Vorrichtung zur Rauchgasreinigung gemäß der vorliegenden Erfindung und
- Fig. 6: eine perspektivische Ansicht einer fünften Ausgestaltung der Vorrichtung zur Rauchgasreinigung gemäß der vorliegenden Erfindung.

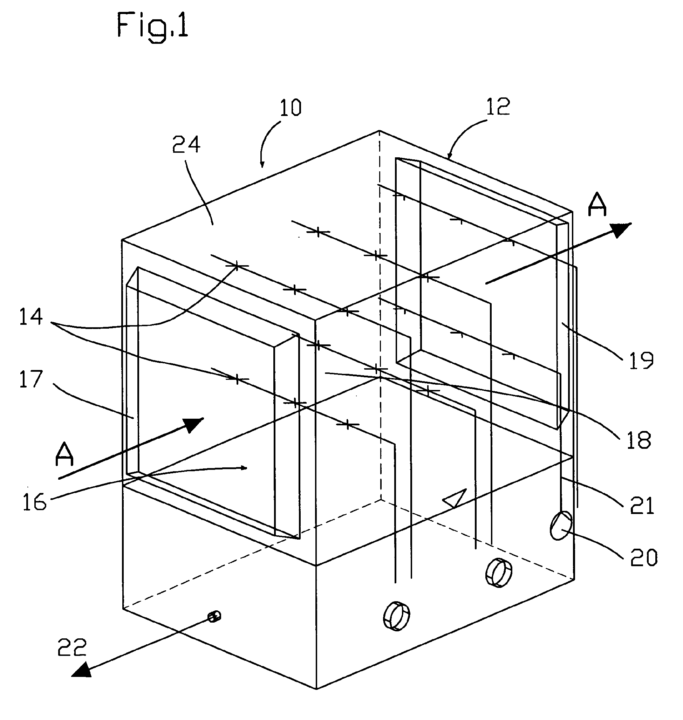

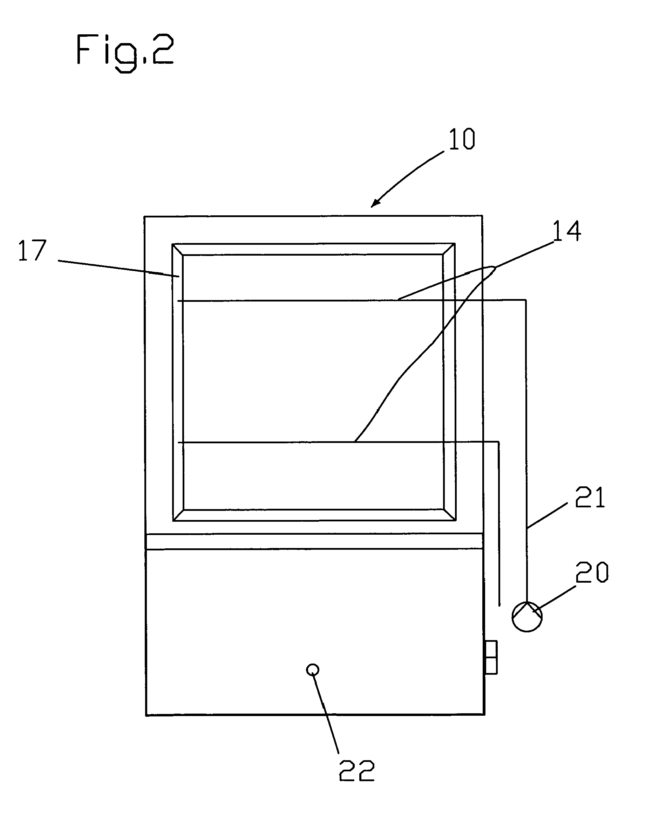

Fig. 1 zeigt eine perspektivische Ansicht einer ersten Ausgestaltung der erfindungsgemäßen Vorrichtung 10 zur Rauchgasreinigung, wobei die Wände der Vorrichtung 10 der besseren Darstellung halber "durchsichtig" dargestellt sind, so daß die innerhalb der Vorrichtung 10 angeordneten Bauteile sichtbar sind. Dies gilt im übrigen auch für die in den Fign. 2 bis 6 dargestellten Vorrichtungen. Bei dem Rauchgas handelt es sich vorzugsweise um Rauchgas eines Kohlekraftwerks oder dergleichen. Die Vorrichtung 10 umfaßt einen Behälter 12, der vorzugsweise quaderförmig ausgebildet ist. In einem oberen Abschnitt des Behälters 12 sind Waschflüssigkeitsdüsen 14 angeordnet, die auf unterschiedlichen Niveaus arrangiert und in verschiedenen Richtungen ausgerichtet sein können, also beispielsweise horizontal oder vertikal, wobei eine horizontale Ausrichtung der Waschflüssigkeitsdüsen 14 bevorzugt ist. Im unteren Abschnitt des Behälters 12 ist ein Waschflüssigkeitssumpf 16 zur Aufnahme von Waschflüssigkeit vorgesehen. Zwischen den Waschflüssigkeitsdüsen 14 und dem Waschflüssigkeitssumpf 16 umfaßt der Behälter 12 einen Absorptionsbereich 18, in den im Betriebszustand der Vorrichtung 10 zu reinigendes Rauchgas im wesentlichen horizontal und mit im wesentlichen konstanter Geschwindigkeit in Richtung der Pfeile A durch die Einlaßöffnung 17 eingeleitet wird und durch die Auslaßöffnung 19 wieder austritt. Mit Hilfe einer Pumpeinrichtung 20 wird über eine Leitung 21 Waschflüssigkeit zu den Waschflüssigkeitsdüsen 14 gepumpt und von diesen in Form eines feinen Nebels auf das den Absorptionsbereich 18 durchströmende Rauchgas gesprüht.

Die in der Waschflüssigkeit enthaltenen Erdalkalien, wie beispielsweise Kalziumkarbonat, reagieren mit den Schwefeloxyden im Rauchgas, wodurch im wesentlichen Kalziumsulfit gebildet wird, das wiederum in der Waschflüssigkeit gebunden ist. Auf diese Weise wird das durch den Absorptionsbereich 18 strömende Rauchgas gereinigt. Die im wesentlichen horizontale Durchströmung des Absorptionsbereiches 18 durch das Rauchgas bringt den Vorteil mit sich, daß eine sehr gleichmäßige Strömung realisierbar ist, die wiederum eine verbesserte Schwefeloxidabscheidung im Absorptionsbereich 18 ermöglicht.

Die den Absorptionsbereich 18 verlassende Waschflüssigkeit, die die Kalziumsulfite enthält, sammelt sich im Waschflüssigkeitssumpf 16. Dort wird sie mit Hilfe einer nicht dargestellten Waschflüssigkeitsanalyseeinrichtung analysiert, also die Waschflüssigkeitszusammensetzung und/oder der pH-Wert der Waschflüssigkeit festgestellt.

Stimmen beispielsweise die mit Hilfe der nicht dargestellten Analyseeinrichtung ermittelten Parameter der in dem Waschflüssigkeitssumpf 16 enthaltenen Waschflüssigkeit mit gewünschten Waschflüssigkeitsparametern für die Kalziumsulfatgewinnung überein, so wird dem Waschflüssigkeitssumpf 16 Waschflüssigkeit entnommen. Die Leitung 22, auch wenn nicht dargestellt, umfaßt die zur Entnahme von Waschflüssigkeit erforderlichen Einrichtungen, wie beispielsweise Ventile, Pumpen oder dergleichen.

In dem Waschflüssigkeitssumpf 16 ist vorzugsweise eine Oxidationseinrichtung vorgesehen, um die dort vorhandenen unerwünschten Kalziumsulfite zu Kalziumsulfat zu oxidieren. Diese Oxidationseinrichtung, die vorliegend nicht dargestellt ist, kann beispielsweise durch eine Sauerstoffzufuhr in Form von Luft erfolgen, wobei die Luft bevorzugt durch waagerecht in dem Waschflüssigkeitssumpf 16 mit entsprechenden Luftauslaßöffnungen zugeführt wird.

Fig. 2 zeigt eine Seitenansicht der in Fig. 1 dargestellten ersten Ausgestaltung der Vorrichtung zur Rauchgasreinigung gemäß der vorliegenden Erfindung. Anhand dieser Figur ist gut zu erkennen, daß die Waschflüssigkeitsdüsen 14 in verschiedenen Ebenen angeordnet sind.

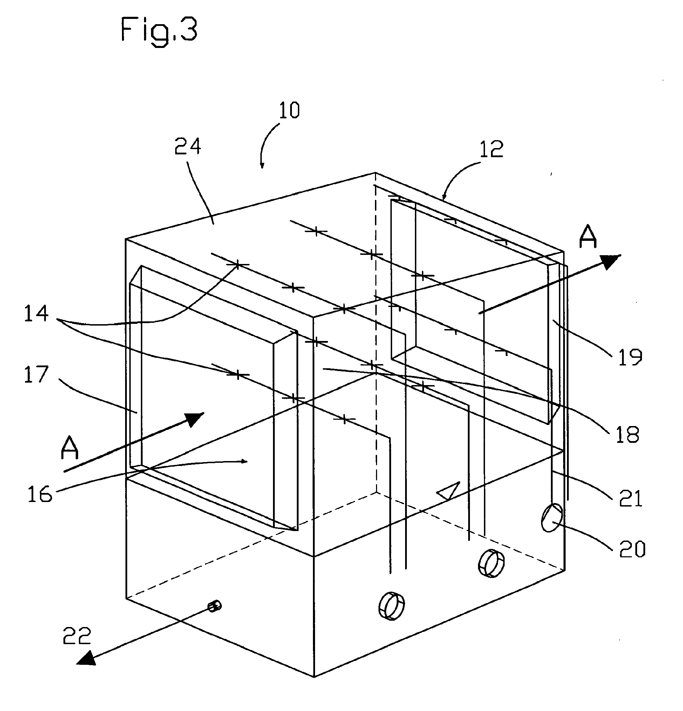

Fig. 3 ist eine perspektivische Ansicht einer weiteren Ausgestaltung der Vorrichtung zur Rauchgasreinigung gemäß der vorliegenden Erfindung. Die in Fig. 3 dargestellte Vorrichtung 10 unterscheidet sich im wesentlichen dahingehend von der in den Fign. 1 und 2 dargestellten Vorrichtung 10, daß die Oberseite 24 derart angewinkelt ist, daß das Volumen des Absorptionsbereiches 18 von der Einlaßöffnung 17 zur Auslaßöffnung 19 kleiner wird. Bei dieser beispielhaften Ausgestaltung ist auch die Einlaßöffnung 17 größer als die Auslaßöffnung 19. Durch diese Ausbildung des Behälters 12 sowie der Einlaß- und Auslaßöffnung 17 und 19 wird das durch den Absorptionsbereich 18 strömende Rauchgas im Behälter 12 beschleunigt, so daß die Geschwindigkeit des Rauchgases zunimmt und somit die Verweildauer in dem Behälter 12 und somit im Absorptionsbereich 18 verkürzt wird.

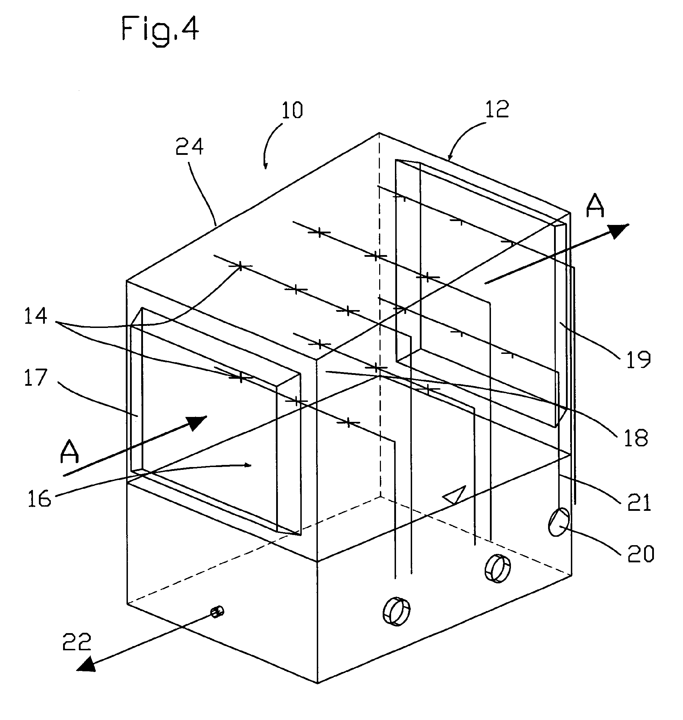

Fig. 4 zeigt noch eine weitere Ausgestaltung der Vorrichtung zur Rauchgasreinigung gemäß der vorliegenden Erfindung. Im Gegensatz zu der in Fig. 3 dargestellten Vorrichtung ist die Oberseite 24 des Behälters 12 derart abgewinkelt, daß das Volumen des Absorptionsbereiches 18 von der Einlaßöffnung 17 zur Auslaßöffnung 19 zunimmt, wobei hier die Einlaßöffnung 17 entsprechend kleiner als die Auslaßöffnung 19 ausgebildet ist. Auf diese Weise wird das Rauchgas auf seinem Weg durch den Absorptionsbereich 18 des Behälters 12 von der Einlaßöffnung 17 zur Auslaßöffnung 19 entspannt, so daß seine Geschwindigkeit abnimmt und somit seine Verweildauer im Absorptionsbereich 18 verlängert wird.

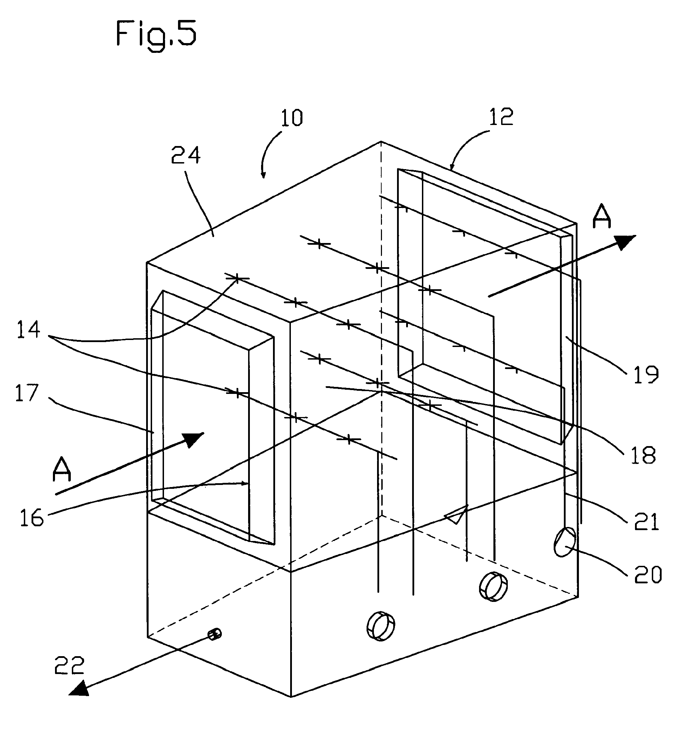

Fig. 5 zeigt eine perspektivische Ansicht einer vierten Ausgestaltung der Vorrichtung zur Rauchgasreinigung gemäß der vorliegenden Erfindung. Diese Ausgestaltung entspricht im wesentlichen der in Fig. 4 dargestellten dritten Ausgestaltung, so daß gemäß Fig. 5 nicht die Oberseite 24 des Behälters 12 sondern die Seitenwände des Behälters 12 derart abgewinkelt sind, daß das Volumen des Absorptionsbereiches von der Einlaßöffnung 17 zur Auslaßöffnung 19 zunimmt.

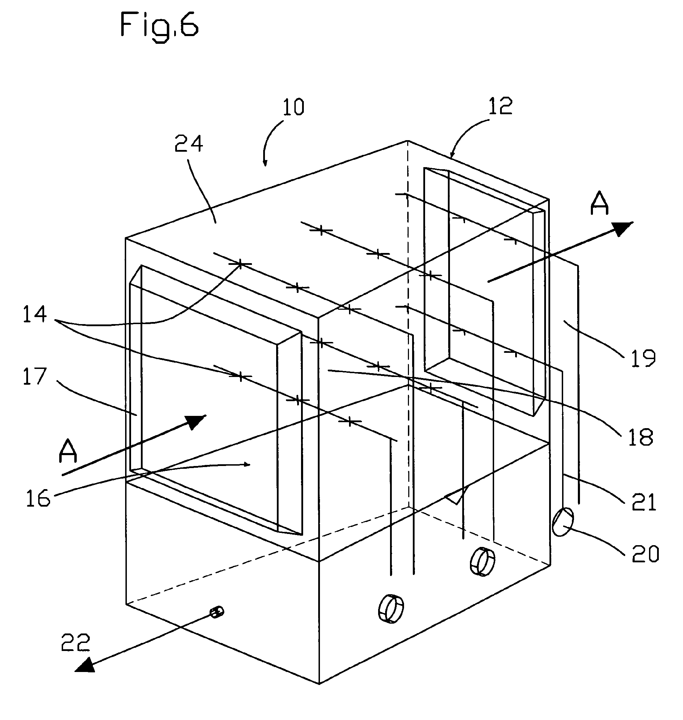

Schließlich ist Fig. 6 eine perspektivische Ansicht einer fünften Ausgestaltung der Vorrichtung zur Rauchgasreinigung gemäß der vorliegenden Erfindung, die im wesentlichen der in Fig. 3 dargestellten Ausgestaltung gleicht, abgesehen von der Tatsache, daß gemäß Fig. 6 nicht die Oberseite 24 des Behälters 12 sondern die Seitenwände des Behälters 12 derart abgewinkelt sind, daß das Volumen des Absorptionsbereiches 18 von der Einlaßöffnung 17 bis zur Auslaßöffnung 19 kleiner wird.

Die in den Figuren 1 bis 6 dargestellten Ausgestaltungen der erfindungsgemäßen Vorrichtung umfassen jeweils eine Oxidationseinrichtung im Waschflüssigkeitssumpf, die in den Figuren der Einfachheit halber jedoch nicht dargestellt ist. Mittels dieser Oxidationseinrichtung wird Sauerstoff in den Waschflüssigkeitssumpf eingeleitet, der mit Kalziumsulfiten zu Kalziumsulfat reagiert.

Ferner können die erfindungsgemäße Vorrichtung und das erfindungsgemäße Verfahren auch beispielsweise zur Meerwasserentsalzung, in der Zementindustrie oder allgemein in fossile Brennstoffe verwertenden Kraftwerken eingesetzt werden.

Es sollte klar sein, daß die zuvor beschriebenen bevorzugten Ausgestaltungen nicht einschränkend sind, also weitere Modifikationen und Änderungen möglich sind, ohne den durch die beiliegenden Ansprüche definierten Schutzbereich der vorliegenden Erfindung zu verlassen.

### B e z u g s z e i c h e n l i s t e :

- 10: Vorrichtung
- 12: Behälter
- 14: Waschflüssigkeitsdüsen
- 16: Waschflüssigkeitssumpf
- 17: Einlaßöffnung
- 18: Absorptionsbereich
- 19: Auslaßöffnung
- 20: Pumpeinrichtung
- 21: Leitung
- 22: Leitung
- 24: Oberseite

## Patentansprüche

1. Vorrichtung zur Rauchgasreinigung mit einem Behälter (12), der einen von dem zugeführten Rauchgas im wesentlichen horizontal durchströmbaren Absorptionsbereich (18) aufweist.

2. Vorrichtung nach Anspruch 1, wobei der Absorptionsbereich (18) einen Rauchgaseinlaß (17) und einen Rauchgasauslaß (19) aufweist, die einander im wesentlichen gegenüber angeordnet sind.

3. Vorrichtung nach einem der vorhergehenden Ansprüche, wobei der Behälter (12) im wesentlichen quaderförmig ausgebildet ist.

4. Vorrichtung nach einem der vorhergehenden Ansprüche, die eine Pumpeinrichtung (20) umfaßt.

5. Vorrichtung nach einem der vorhergehenden Ansprüche, die eine Waschflüssigkeitsanalyseeinrichtung umfaßt.

6. Vorrichtung nach Anspruch 5, wobei die Waschflüssigkeitsanalyseeinrichtung kontinuierlich Waschflüssigkeitsproben analysiert.

7. Vorrichtung nach einem der vorhergehenden Ansprüche, wobei zumindest Seite des Behälters (12) derart ausgebildet ist, daß das Volumen des Absorptionsbereiches (18) von einem Rauchgaseinlaß (17) zu einem Rauchgasauslaß (19) zunimmt oder abnimmt.

8. Verfahren zur Rauchgasreinigung unter Verwendung einer Vorrichtung nach einem der vorhergehenden Ansprüche, bei dem Rauchgas im wesentlichen horizontal durch einen Absorptionsbereich (18) hindurchgeleitet wird.

9. Verfahren nach Anspruch 8, bei dem Waschflüssigkeit aus dem Waschflüssigkeitssumpf (16) zu den Waschflüssigkeitsdüsen (14) gepumpt wird.

10. Verfahren nach Anspruch 8 oder 9, bei dem der Waschflüssigkeit basierend auf einem Ergebnis einer Waschflüssigkeitsanalyse Additive hinzugefügt werden.

11. Verfahren nach einem der Ansprüche 8 bis 10, bei dem dem Waschflüssigkeitssumpf (16) Waschflüssigkeit basierend auf einem Ergebnis einer Waschflüssigkeitsanalyse entnommen wird.

12. Verfahren nach einem der Ansprüche 8 bis 10, bei dem das durch den Absorptionsbereich (18) des Behälters (12) geleitete Rauchgas beschleunigt oder abgebremst wird.
